# EUROPÄISCHE PATENTANMELDUNG

(11) **EP 1 671 847 A1**
(43) Veröffentlichungstag der Anmeldung: **21.06.2006**
(21) Anmeldenummer: 05027940.5
(22) Anmeldetag: 20.12.2005
(51) Int. Cl.: B60R 13/08, B29C 45/14

(54) **Hitzeschild und Verfahren zu dessen Herstellung**

(30) Priorität: 20.12.2004 DE 102004062331
(71) Anmelder: Carcoustics Tech Center GmbH, 51381 Leverkusen (DE)
(72) Erfinder: Brück, Eduard, 51381 Leverkusen (DE); Hysky, Johannes, 42799 Leichlingen (DE)
(74) Vertreter: Meyer, Hans-Joachim

(57) **Zusammenfassung**

Die Erfindung betrifft einen Hitzeschild (1) für Kraftfahrzeuge, mit einer wärmereflektierenden Metallfolie (2) und einem damit verbundenen Trägerteil (3) aus Kunststoff, wobei das Trägerteil durch Hinterspritzen der Metallfolie gebildet ist. Erfindungsgemäß sind in dem Trägerteil (3) mehrere fensterartige Aussparungen (4) vorgesehen, die durch die Metallfolie (2) abgedeckt sind, wobei die Metallfolie (2) zumindest bereichsweise eine Prägestruktur aufweist. Hierdurch wird erreicht, dass der Hitzeschild (1) bei hoher Formstabilität relativ leicht ist und zugleich eine Schallabsorption ermöglicht bzw. schallabsorbierend wirkt. Insbesondere ermöglicht das Kunststoffträgerteil (3) die Integration verschiedener Zusatzfunktionen an dem Hitzeschild. Des weiteren wird ein verfahren zur Herstellung eines solchen Hitzeschildes (1) beschrieben.

## Beschreibung

Die Erfindung betrifft einen Hitzeschild für Kraftfahrzeuge, mit einer wärmereflektierenden Metallfolie und einem damit verbundenen Trägerteil aus Kunststoff, wobei das Trägerteil durch Hinterspritzen der Metallfolie gebildet ist.

Hitzeschilde dienen in Kraftfahrzeugen zur wärmeabschirmung des Fahrzeuginnenraumes sowie von Fahrzeugkomponenten, deren Funktion durch übermäßige Wärmebelastung beeinträchtigt wird. So werden Hitzeschilde insbesondere im Bereich des Auspuffstranges angeordnet und am Fahrzeugunterboden befestigt.

Herkömmliche Hitzeschilde sind üblicherweise ausschließlich aus Aluminiumblech und/oder Aluminiumfolie aufgebaut und als Tiefziehformteile ausgeführt, die gegebenenfalls mit Befestigungselementen komplettiert werden müssen. Verwendet werden beispielsweise Hitzeschilde, die aus mehreren Aluminiumfolien hergestellt sind, welche am Rand durch Bördeln miteinander verbunden sind.

Aus der EP 0 934 809 A1 ist ein Hitzschild bekannt, der aus einer wärmereflektierenden Metallfolie und einer damit flächig verbundenen Tragschicht aus einem wärmedämmenden Kunststoff besteht, wobei die Metallfolie mit einer Haftschicht, z.B. einer dünnen Kunststoffschicht aus Polyethylen versehen und die Tragschicht auf der Seite dieser Haftschicht an die Metallfolie angespritzt ist. Zur Herstellung dieses bekannten Hitzeschildes wird die bereits mit der Haftschicht versehene Metallfolie zwischen zwei Formhälften einer Spritzgussform eingelegt und beim Schließen der beiden Formhälften vorgeformt. Die Formhälften bilden im geschlossenen Zustand einen Formhohlraum, in den zum Herstellen der Tragschicht Kunststoff über eine Einspritzöffnung eingespritzt wird. Die Metallfolie wird dabei vollflächig hinterspritzt und erhält so ihre endgültige Form. Beim Hinterspritzen der Metallfolie werden zugleich an der Tragschicht angeformte Befestigungsteile gebildet.

Dieser bekannte Hitzeschild weist zwar eine hohe Formstabilität auf, er ist jedoch relativ schwer und für eine neben der Wärmeabschirmung häufig ebenfalls gewünschte Schallabsorption eher ungeeignet.

Davon ausgehend liegt der vorliegenden Erfindung die Aufgabe zugrunde, einen Hitzeschild der eingangs genannten Art zu schaffen, der bei hoher Formstabilität relativ leicht ist und zugleich eine Schallabsorption ermöglicht bzw. schallabsorbierend wirkt. Darüber hinaus soll ein verfahren zur Herstellung eines solchen Hitzeschildes angegeben werden.

Erfindungsgemäß wird diese Aufgabe durch einen Hitzeschild mit den Merkmalen des Anspruchs 1 bzw. durch ein Verfahren mit den Merkmalen des Anspruchs 12 gelöst.

Der erfindungsgemäße Hitzeschild weist eine wärmereflektierende Metallfolie und ein damit verbundenes Trägerteil aus Kunststoff auf. Das Trägerteil ist durch Hinterspritzen der Metallfolie gebildet und weist mehrere fensterartige Aussparungen auf, die durch die Metallfolie abgedeckt sind, wobei die Metallfolie zumindest bereichsweise eine Prägestruktur aufweist.

Das erfindungsgemäße Herstellungsverfahren ist im wesentlichen dadurch gekennzeichnet, dass zum Hinterspritzen der Metallfolie ein Spritzgusswerkzeug verwendet wird, dessen Werkzeugteile im geschlossenen Zustand eine netzartig ausgebildete Kavität mit untereinander verbundenen Kanälen bilden, wobei einander zugeordnete Formoberflächen der Werkzeugteile ineinanderpassende reliefartige Prägestrukturen aufweisen.

Die Erfindung basiert auf der Erkenntnis, dass das Kunststoffträgerteil für eine gute Formstabilität eines gattungsgemäßen Hitzeschildes nicht vollflächig ausgeführt werden muss. Die fensterartigen Aussparungen im Kunststoffträgerteil verringern die Formstabilität des Hitzeschildes nicht erheblich, führen aber zu einer vorteilhaften Gewichtsreduzierung und ermöglichen in ihrem jeweiligen Bereich eine Schallabsorption über die schalltransparente Metallfolie. Der Rückseite des Hitzeschildes kann hierzu vorzugsweise eine schallabsorbierende Materiallage zugeordnet werden, die an dem Kunststoffträgerteil oder getrennt davon an einer benachbarten Komponente oder Stelle des Fahrzeuges, z.B. am Bodenblech oder motorseitig an der den Motorraum vom Fahrgastraum trennenden Stirnwand, befestigt wird.

Im Übrigen wird der eher geringfügige Verlust an Formstabilität aufgrund der fensterartigen Aussparungen im Kunststoffträgerteil durch die Prägestruktur der Metallfolie zumindest teilweise kompensiert.

In diesem Zusammenhang besteht eine vorteilhafte Ausgestaltung des erfindungsgemäßen Hitzeschildes darin, dass das Trägerteil im Thermoplast-Schaum-Spritzgießen hergestellt wird, so dass das fertige Trägerteil eine zellige Kernzone und eine kompakte Außenhaut aufweist. Auf diese Weise lässt sich das Flächengewicht des Trägerteils unter Beibehaltung der Steifigkeit verringern. Die zellige Kernzone verleiht dem Trägerteil eine relativ hohe Steifigkeit bei reduziertem Flächengewicht. Zudem wirkt sich die zellige Kernzone auch hinsichtlich der gewünschten Schallabsorption vorteilhaft aus.

Die Prägestruktur der Metallfolie, die vorzugsweise eine Noppenstruktur ist, wird durch die entsprechend ausgebildeten Formoberflächen des Spritzgusswerkzeuges beim Zufahren des Spritzgusswerkzeughälften bzw. -werkzeugteile in die Metallfolie eingeprägt.

Des Weiteren kann die Formoberfläche des Spritzgusswerkzeuges auch in dem Bereich, der im geschlossenen Zustand des Spritzgusswerkzeuges die Kanäle der netzartigen Kavität überdeckt, eine reliefartige Prägestruktur aufweisen, so dass die in das Spritzgusswerkzeug eingelegte Metallfolie beim Hinterspritzen durch den vom eingespritzten Kunststoff ausgehenden Druck auch im Bereich der Kanäle eine Oberflächenprägung erhält.

Bei der zur Herstellung des erfindungsgemäßen Hitzeschildes verwendeten Metallfolie kann es sich somit um ungeprägte Ware handeln, die im allgemeinen kostengünstiger als bereits geprägte Ware ist.

Die Metallfolie ist vorzugsweise mikroperforiert. Hierdurch wird die schallabsorbierende Wirkung des erfindungsgemäßen Hitzeschildes verbessert.

Die Metallfolie kann insbesondere durch Ätzen mikroperforiert werden. Durch Ätzen hergestellte Mikrolöcher haben gegenüber Mikrolöchern, die mittels Nadelwerkzeugen hergestellt werden, den Vorteil, dass sie keinen kraterartigen Lochrand aufweisen, der beim Prägen der Metallfolie gegebenenfalls in das Mikroloch gedrückt wird und dieses dann wieder verschließt. Alternativ können die Mikrolöcher auch mittels Laserstrahltechnik hergestellt werden.

Ätzen eignet sich auch gut zur Oberflächenbehandlung der Metallfolie, um deren Haftungseigenschaften hinsichtlich der Verbindung mit dem Kunststoff des Trägerteils zu verbessern.

Durch die oben bereits erwähnte Oberflächenprägung der Metallfolie im Bereich der netzartigen Kavität des Spritzgusswerkzeuges wird die Verbindung zwischen der Metallfolie und dem Kunststoffträgerteil ebenfalls erhöht.

Eine weitere bevorzugte Ausgestaltung des erfindungsgemäßen Hitzeschildes besteht darin, dass an dem Trägerteil mindestens ein Befestigungselement einstückig angeformt ist, wobei das Befestigungselement vorzugsweise als Rastverbindungselement ausgeführt ist. Das Befestigungselement kann der Befestigung des Hitzeschildes am Fahrzeug dienen. Alternativ oder ergänzend kann das Befestigungselement aber auch als Halter zur Befestigung eines Schallabsorbers, eines Kabels und/oder einer Fluidleitung ausgebildet sein. In dem erfindungsgemäßen Hitzeschild sind dann verschiedene zusatzfunktionen integriert.

Weitere bevorzugte und vorteilhafte Ausgestaltungen des erfindungsgemäßen Hitzeschildes sowie des Verfahrens zu seiner Herstellung sind in den Unteransprüchen angegeben.

Nachfolgend wird die Erfindung anhand einer mehrere Ausführungsbeispiele darstellenden zeichnung näher erläutert. Es zeigen schematisch:
- Fig. 1: eine perspektivische Darstellung eines erfindungsgemäßen Hitzeschildes über einem Abschnitt eines Auspuffrohres;
- Fig. 2: eine vergrößerte Detailansicht von Befestigungselementen des Hitzeschildes gemäß Fig. 1;
- Fig. 3: eine perspektivische Darstellung eines erfindungsgemäßen Hitzeschildes über einem Abschnitt eines Auspuffrohres in einer zweiten Ausführungsform;
- Fig. 4: eine Schnittdarstellung eines Abschnitts eines Spritzgusswerkzeuges zur Herstellung eines erfindungsgemäßen Hitzeschildes mit eingelegter Metallfolie im geschlossenen Zustand;
- Fig. 5: eine Schnittdarstellung gemäß Fig. 4, wobei in die Kanäle der netzartigen Kavität des Spritzguss- werkzeuges Kunststoff eingespritzt und die eingelegte Metallfolie somit hinterspritzt ist;
- Fig. 6: eine Schnittdarstellung des Randes eines erfindungsgemäßen Hitzeschildes in einer weiteren Ausführungsvariante;
- Fig. 7: eine perspektivische Darstellung eines erfindungsgemäßen Hitzeschildes über einem Abschnitt eines Auspuffrohres in einer weiteren Ausführungsform; und
- Fig. 8: eine Draufsicht auf ein Trägerteil eines erfindungsgemäßen Hitzeschildes in einer weiteren Ausführungsvariante.

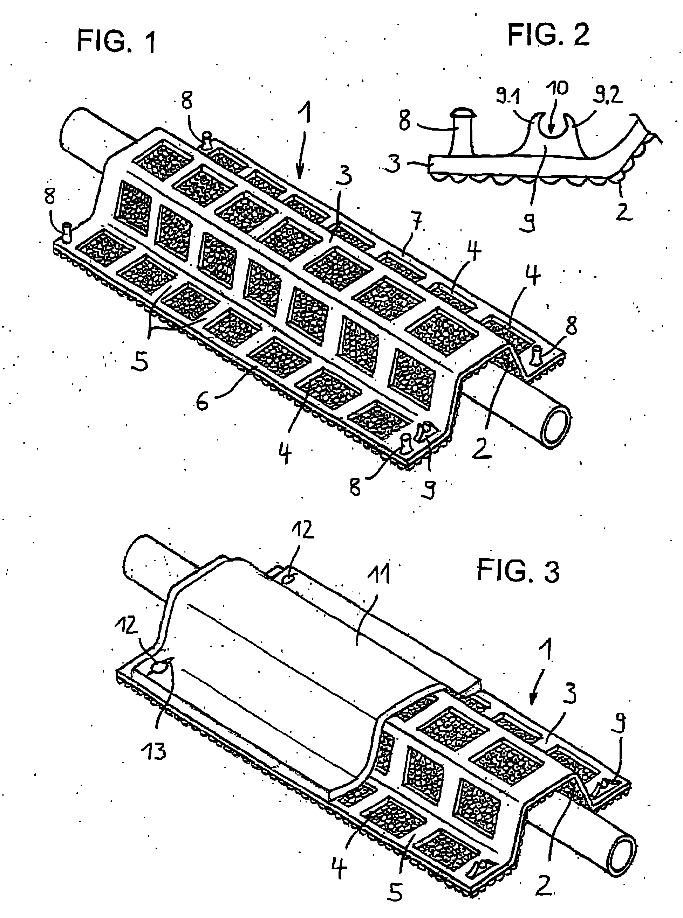

Der in Fig. 1 schematisch dargestellte Hitzeschild 1 kann zum Beispiel innerhalb eines Getriebetunnels eines Kraftfahrzeuges angeordnet und am Bodenblech des Fahrzeuges befestigt werden. Der kanalförmig ausgebildete Hitzschild 1 weist eine dünne, wärmereflektierende Metallfolie 2 auf, die mit einem Trägerteil 3 aus Kunststoff stoffschlüssig verbunden ist.

Die Metallfolie 2 ist vorzugsweise eine Aluminiumfolie, deren Dicke im Bereich von beispielsweise 10 bis 100 µm liegt. Die Metallfolie 2 ist mit einer Vielzahl von Mikrolöchern versehen, deren Lochdurchmesser weniger als 1 mm beträgt. Der Lochdurchmesser liegt insbesondere im Bereich von 0,01 bis 0,5 mm. Die Mikrolöcher sind vorzugsweise durch Ätzen oder durch Laserstrahlbehandlung hergestellt.

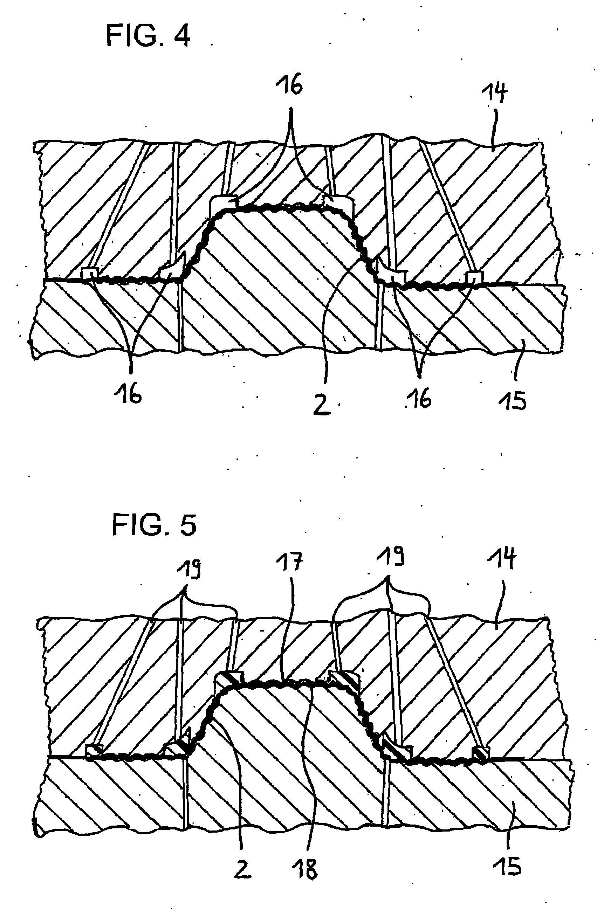

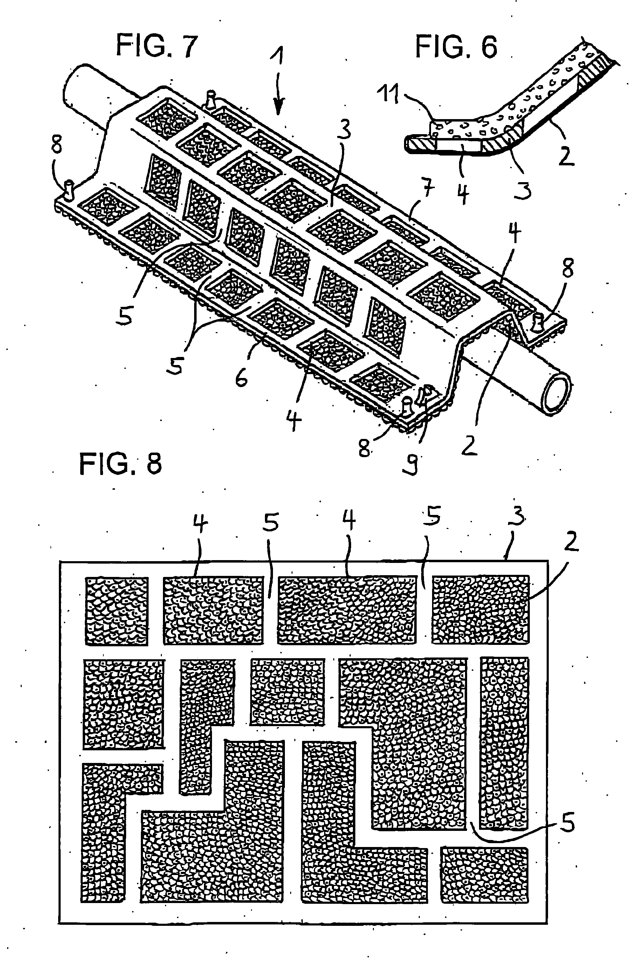

Des Weiteren ist zu erkennen, dass die Metallfolie 2 eine Prägestruktur aufweist. Die Prägestruktur erstreckt sich über die gesamte Fläche der Metallfolie 2 und umfasst eine Vielzahl kleiner noppenförmiger Erhebungen sowie Vertiefungen. Die Herstellung der Prägestruktur wird weiter unten mit Bezug auf die Figuren 4 und 5 erläutert.

Das Trägerteil 3 ist ein Spritzgussteil, das durch Hinterspritzen der Metallfolie 2 hergestellt ist. Das Trägerteil 3 weist eine Vielzahl fensterartiger Aussparungen 4 auf, die durch die Metallfolie 2 abgedeckt sind. Die fensterartigen Aussparungen 4 sind durch Stege 5 des Trägerteils 3 begrenzt. Das Trägerteil 3 besitzt somit eine Skelettstruktur. In dem dargestellten Ausführungsbeispiel sind die Aussparungen 4 mehr oder weniger quadratisch ausgebildet. Die Aussparungen 4 können jedoch auch rautenförmig, rund und/oder oval ausgebildet werden. Insbesondere liegt es im Rahmen der Erfindung, die Aussparungen 4 streifenförmig auszubilden, so dass sie quer zur Längsachse des kanalförmigen Trägerteils 3 verlaufen und sich von einem Flanschabschnitt 6 über den tunnelartig gewölbten Abschnitt zum anderen Flanschabschnitt 7 erstrecken.

An dem Trägerteil 3 sind mehrere Befestigungselement 8 einstückig angeformt, die der Befestigung des Hitzeschildes 1 am Kraftfahrzeug dienen. Die Befestigungselemente 8 sind vorzugsweise als Rastverbindungselemente ausgeführt, denen am Fahrzeugboden angeordnete komplementäre Rastverbindungselemente (nicht gezeigt) zugeordnet sind. Darüber hinaus ist an dem Trägerteil 3 mindestens ein Halter 9 zur Befestigung eines Kabels und/oder einer Fluidleitung, beispielsweise einer Kraftstoffleitung oder Bremsleitung, einstückig angeformt. Wie in Fig. 2 dargestellt, kann der Halter 9 hierzu zwei elastisch spreizbare Schenkel 9.1 und 9.2 aufweisen, die eine hinterschnittene Ausnehmung 10 zur formschlüssigen. Aufnahme eines Kabel oder einer Fluidleitung bilden.

In Fig. 3 ist eine weiteres Ausführungsbeispiel eines erfindungsgemäßen Hitzeschildes 1 dargestellt. Diese Variante unterscheidet sich von dem Ausführungsbeispiel gemäß Fig. 1 im Wesentlichen dadurch, dass das Trägerteil 3 an seiner der Metallfolie 2 abgewandten Seite mit einer schallabsorbierenden Materiallage 11 abgedeckt ist. Die Materiallage 11 ist beispielsweise aus Schaumstoff, vorzugsweise aus Melaminharz-Schaumstoff und/oder einem Faservlies, vorzugsweise Folyestervlies, gebildet. Die schallabsorbierende Materiallage 11 kann mit dem Trägerteil 3 durch Verklebung oder Verschweißung verbunden sein. Vorzugsweise ist an dem Trägerteil 3 aber mindestens ein Befestigungselement 12 zur Befestigung der schallabsorbierenden Materiallage 11 einstückig angeformt. Die Befestigungselemente 12 weisen jeweils einen knopfförmigen bzw. durchmessererweiterten Kopf auf, dem eine schlitzförmige Öffnung 13 in der elastisch dehnbaren Materiallage 11 zugeordnet ist. Die Materiallage 11 lässt sich somit an dem Trägerteil 3 anknöpfen und bei Bedarf wieder problemlos lösen. Die Materiallage 11 ist im Bereich der Aussparungen 4 des Trägerteils 3 gegenüber der Metallfolie beabstandet. Der jeweilige Abstand entspricht im wesentlichen der wanddicke der Stege 5 des Trägerteils 3, welche die jeweilige Aussparung 4 begrenzen. Die Aussparungen 4 bilden somit wärmeisolierende Luftkammern.

Unter Bezug auf die Figuren 4 und 5 wird nun ein Beispiel für die Herstellung eines erfindungsgemäßen Hitzeschildes 1 erläutert. Die bereits mikroperforierte Metallfolie 2 wird zwischen ein Oberwerkzeug 14 und ein Unterwerkzeug 15 eines Spritzgusswerkzeuges eingelegt. Die Werkzeugteile 14, 15 definieren im geschlossenen Zustand eine netzartig ausgebildete Kavität mit untereinander verbundenen Kanälen 16. Ferner ist zu erkennen, dass die einander zugeordneten Formoberflächen 17, 18 der Werkzeugteile 14, 15 ineinanderpassende reliefartige Prägestrukturen aufweisen.

Die Metallfolie 2 wird beim Zufahren des Spritzgusswerkzeuges umgeformt und erhält durch die reliefartigen Formoberflächen 17, 18 schließlich seine Prägestruktur. Sobald das Spritzgusswerkzeug geschlossen und die Metallfolie 2 zwischen den reliefartigen Formoberflächen 17, 18 der Werkzeugteile 14, 15 eingespannt ist, wird über eine oder mehrere im Oberwerkzeug 14 angeordnete Einspritzöffnungen 19 Kunststoff in die Kanäle 16 der netzartige Kavität eingespritzt. Die untereinander verbundenen Kanäle 16 werden vollständig mit der Kunststoffmasse ausgespritzt. Hierbei legt sich die Metallfolie 2 im Bereich der Kanäle 16 an die reliefartige Formoberfläche 18 des Unterwerkzeuges 15 an. Die Fig. 5 zeigt das Spritzgusswerkzeug gemäß Fig. 4 nach dem Einspritzen des Kunststoffes. Das skelettartige Trägerteil und die Befestigungselemente (hier nicht gezeigt) sind gebildet.

Das Trägerteil 3 wird vorzugsweise aus faserverstärktem und/oder gefülltem Polyamid (PA), Polyphenylensulfid (PPS) oder Polyacryletherketon (PAEK) hergestellt.

Eine vorteilhafte Ausgestaltung des Verfahrens zur Herstellung des erfindungsgemäßen Hitzeschildes 1 besteht darin, dass das Trägerteil 3 im Thermoplast-Schaum-Spritzgießen hergestellt wird. Das fertige Trägerteil 3 weist dann eine zellige Kernzone und eine kompakte Außenhaut auf. Auf diese Weise lässt sich das Flächengewicht des Trägerteils 3 unter Beibehaltung seiner Steifigkeit verringern.

Als Metallfolie 2 wird vorzugsweise eine zumindest bereichsweise durch Ätzen oberflächenbehandelte Metallfolie verwendet, wobei die oberflächenbehandelte Seite der Metallfolie 2 mit dem Kunststoff hinterspritzt wird. Im Vergleich zu den Metallfolien herkömmlicher Hitzeschilde kann die Metallfolie 2 des erfindungsgemäßen Hitzeschildes dünner ausgebildet sein, da die erforderliche Festigkeit des Hitzeschildes über das Trägerteil 3 erreicht wird.

Die Metallfolie 2 wird vorzugsweise so bemessen, dass sie umlaufend über den Rand des Trägerteils 3 gebördelt werden kann. Dies ist in Fig. 6 schematisch dargestellt.

Nachdem der Kunststoff hinreichend ausgehärtet ist, wird das fertige Trägerteil 3 mit der damit stoffschlüssig verbundenen Metallfolie 2 aus dem Spritzgusswerkzeug entnommen. Bei Bedarf wird das Trägerteil 3 anschließend noch an seiner der Metallfolie 2 abgewandten Seite zumindest bereichsweise mit einer schallabsorbierenden Materiallage 11 versehen.

In den Fig. 7 und 8 sind weitere Ausführungsbeispiele eines erfindungsgemäßen Hitzeschildes veranschaulicht, bei denen die Stege bzw. Rippen 5 des Trägerteils 3 zueinander versetzt angeordnet sind. Durch die versetzte Anordnung der Stege (Rippen) 5 lässt sich bei verringerter oder gleicher Masse eine relativ hohe Formstabilität des Trägerteils 3 gegenüber dem Ausführungsbeispiel gemäß Fig. 1 erzielen.

Wie in Fig. 8 dargestellt, können die Aussparungen 4 unterschiedlich groß ausgebildet sein sowie unterschiedliche Flächenformen aufweisen. Insbesondere können neben rechteckigen und/oder quadratischen Aussparungen auch dreieckige, L-förmige, Z-förmige sowie andere polygonale Aussparungen 4 ausgebildet werden. Die Biegesteifigkeit des Trägerteils 3 kann durch die verschiedenen Größen und Flächenformen der Aussparungen bereichsweise unterschiedlich stark ausgebildet werden.

Die Ausführung der Erfindung ist nicht auf die vorstehend beschriebenen Ausführungsbeispiele beschränkt. Vielmehr sind verschiedene Varianten möglich, die auch bei grundsätzlich abweichender Gestaltung von der in den Ansprüchen angegebenen Erfindung Gebrauch machen. So ist die in den Figuren 1 und 3 gezeigte kanalförmige Ausgestaltung des Hitzeschildes 1 nur ein Beispiel. Die räumliche Form des Hitzschildes wird selbstverständlich dem jeweiligen Einbauort und der zu isolierenden Wärmequelle angepasst.

## Patentansprüche

1. Hitzeschild (1) für ein Kraftfahrzeug, mit einer wärmereflektierenden Metallfolie (2) und einem damit verbundenen Trägerteil (3) aus Kunststoff, wobei das Trägerteil durch Hinterspritzen der Metallfolie gebildet ist,
**dadurch gekennzeichnet, dass**
das Trägerteil (3) mehrere fensterartige Aussparungen aufweist, die durch die Metallfolie (2) abgedeckt sind, wobei die Metallfolie (2) zumindest bereichsweise eine Prägestruktur aufweist.

2. Hitzeschild nach Anspruch 1,
**dadurch gekennzeichnet, dass**
die fensterartigen Aussparungen (4) durch Stege (5) eines gitterartigen Bereiches des Trägerteils (3) begrenzt sind.

3. Hitzeschild nach Anspruch 2,
**dadurch gekennzeichnet, dass**
zumindest ein Teil der Stege (5) versetzt zueinander angeordnet sind.

4. Hitzeschild nach einem der Ansprüche 1 bis 3,
**dadurch gekennzeichnet, dass**
an dem Trägerteil (3) mindestens ein Befestigungselement (8) zur Befestigung des Hitzeschildes (1) einstückig angeformt ist.

5. Hitzeschild nach Anspruch 4,
**dadurch gekennzeichnet, dass**
das Befestigungselement (8) ein Rastverbindungselement ist.

6. Hitzeschild nach einem der Ansprüche 1 bis 5,
**dadurch gekennzeichnet, dass**
an dem Trägerteil (3) mindestens ein Halter (9) zur Befestigung eines Kabels und/oder einer Fluidleitung einstückig angeformt ist.

7. Hitzeschild nach einem der Ansprüche 1 bis 6,
**dadurch gekennzeichnet, dass**
das Trägerteil (3) an seiner der Metallfolie (2) abgewandten Seite zumindest bereichsweise mit einer schallabsorbierenden Materiallage (11) bedeckt ist.

8. Hitzeschild nach Anspruch 7,
**dadurch gekennzeichnet, dass**
die schallabsorbierende Materiallage (11) aus Schaumstoff und/oder einem Faservlies gebildet ist.

9. Hitzeschild nach Anspruch 7 oder 8,
**dadurch gekennzeichnet, dass**
an dem Trägerteil (3) mindestens ein Befestigungselement (12) zur Befestigung der schallabsorbierenden Materiallage (11) einstückig angeformt ist.

10. Hitzeschild nach einem der Ansprüche 1 bis 9,
**dadurch gekennzeichnet, dass**
die Metallfolie (2) mikroperforiert ist.

11. Hitzeschild nach einem der Ansprüche 1 bis 10,
**dadurch gekennzeichnet, dass**
das Trägerteil (3) eine zellige Kernzone und eine im wesentlichen zellenfreie Außenhaut aufweist.

12. Verfahren zur Herstellung eines Hitzeschildes nach Anspruch 1, bei dem eine Metallfolie (2) in ein Spritzgusswerkzeug eingelegt und in diesem mit Kunststoff zur Erzeugung eines Trägerteiles (3) hinterspritzt wird,
**dadurch gekennzeichnet, dass**
zum Hinterspritzen der Metallfolie (2) ein Spritzgusswerkzeug verwendet wird, dessen Werkzeugteile (14, 15) im geschlossenen Zustand eine netzartig ausgebildete Kavität mit untereinander verbundenen Kanälen (16) bilden, wobei einander zugeordnete Formoberflächen (17, 18) der Werkzeugteile ineinanderpassende reliefartige Prägestrukturen aufweisen.

13. Verfahren nach Anspruch 12,
**dadurch gekennzeichnet, dass**
als Metallfolie (2) eine zumindest bereichsweise perforierte Metallfolie verwendet wird.

14. verfahren nach Anspruch 12 oder 13,
**dadurch gekennzeichnet, dass**
als Metallfolie (2) eine durch Ätzen oder Laserstrahlbehandlung mikroperforierte Metallfolie verwendet wird.

15. Verfahren nach einem der Ansprüche 12 bis 14,
**dadurch gekennzeichnet, dass**
als Metallfolie (2) eine zumindest bereichsweise durch Ätzen oberflächenbehandelte Metallfolie verwendet wird, wobei die oberflächenbehandelte Seite der Metallfolie (2) mit dem Kunststoff hinterspritzt wird.

16. Verfahren nach einem der Ansprüche 12 bis 15,
**dadurch gekennzeichnet, dass**
das Trägerteil (3) im Thermoplast-Schaum-Spritzgießen hergestellt wird, so dass das fertige Trägerteil (3) eine zellige Kernzone und eine kompakte Außenhaut aufweist.

17. Verfahren nach einem der Ansprüche 12 bis 16,
**dadurch gekennzeichnet, dass**
das Trägerteil (3) an seiner der Metallfolie (2) abgewandten Seite zumindest bereichsweise mit einer schallabsvrbierenden Materzallage (11) abgedeckt wird.
